# EUROPÄISCHE PATENTSCHRIFT

(11) **EP 3 636 375 B1**
(45) Veröffentlichungstag und Bekanntmachung des Hinweises auf die Patenterteilung: **13.12.2023**
(21) Anmeldenummer: 19201673.1
(22) Anmeldetag: 07.10.2019
(51) Int. Cl.: B23G 5/00, B23P 15/36, B23G 7/02, B23G 5/18, B23G 5/06, B22F 5/00, B22F 7/08, B22F 7/06, B22F 10/28, B33Y 40/10, B33Y 80/00, B23P 15/52, B23P 15/48

(54) **VERFAHREN ZUR HERSTELLUNG EINES GEWINDEWERKZEUGES UND EIN GEWINDEWERKZEUG**
METHOD FOR PRODUCING A THREADED TOOL AND A THREADED TOOL
PROCÉDÉ DE FABRICATION D'UN OUTIL À FILETER ET OUTIL À FILETER

(30) Priorität: 10.10.2018 DE 102018125052
(43) Veröffentlichungstag der Anmeldung: 15.04.2020
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Zeus, Thomas, 91217 Hersbruck (DE)
(74) Vertreter: Schröer, Gernot H.

(56) Entgegenhaltungen:
- EP-A1- 3 170 601
- EP-A1- 3 170 602
- CN-A- 108 188 460
- DE-A1-102004 032 093
- US-A1- 2017 239 740

## Beschreibung

Die Erfindung betrifft ein Verfahren zur Herstellung eines Gewindewerkzeuges und ein Gewindewerkzeug.

Zur Gewindeerzeugung oder Gewindenachbearbeitung sind ausschließlich spanabhebend, ausschließlich spanlos und sowohl spanabhebend als auch spanlos arbeitende Verfahren und Gewindewerkzeuge bekannt. Spanabhebende Gewindeerzeugung beruht auf Abtrag des Materials des Werkstücks im Bereich des Gewindeganges (oder: Gewindeprofils). Spanlose Gewindeerzeugung beruht auf einer Erzeugung des Gewindeganges in dem Werkstück durch Druck und die dadurch bewirkte Umformung oder plastische Verformung des Werkstücks. Ein Vorteil der spanlosen Gewindeerzeugung im Vergleich zu spanabhebender Gewindeerzeugung ist, dass durch die Verfestigung oder Verdichtung an der Oberfläche die Härte des Werkstoffs im Bereich des Gewindeprofils ansteigt und somit ein verschleißfesteres Gewinde erzeugt werden kann.

Unter die spanabhebenden oder spanenden Gewindeerzeugung fallen die Gewindebohrer (vgl. Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*)*, im Folgenden nur als "EMUGE-Handbuch" bezeichnet, Kapitel 8, Seiten 181 bis 298) und die Gewindefräser (vgl. EMUGE-Handbuch, Kapitel 10, Seiten 325 bis 372)*.*

Ein Gewindebohrer ist ein axial zu seiner Werkzeugachse arbeitendes Gewindeschneidwerkzeug, dessen Schneiden entlang eines Außengewindes mit der Gewindesteigung des zu erzeugenden Gewindes angeordnet sind. Beim Erzeugen des Gewindes wird der Gewindebohrer mit axialem Vorschub und unter Drehung um seine Werkzeugachse mit von der Vorschubgeschwindigkeit abhängiger Drehgeschwindigkeit in eine Bohrung des Werkstücks bewegt, wobei seine Schneiden permanent mit dem Werkstück an der Wandung der Bohrung in Eingriff sind (kontinuierlicher Schnitt).

Beim Gewindefräser sind mehrere Fräszähne mit Frässchneiden entlang des Werkzeugumfangs und/oder axial zur Werkzeugachse versetzt angeordnet. Zum Erzeugen des Gewindes wird der Gewindefräser um seine eigene Werkzeugachse rotiert und mit seiner Werkzeugachse in einer linearen Vorschubbewegung einerseits und zusätzlich einer Zirkularbewegung um eine Mittelachse des zu erzeugenden Gewindes oder der Vorbohrung im Werkstück andererseits bewegt, wodurch sich eine schraubenförmige Bewegung des Werkzeugs ergibt, deren Steigung der Gewindesteigung des zu erzeugenden Gewindes entspricht. Die Frässchneiden des Gewindefräsers greifen intermittierend nacheinander in das Werkstück ein (unterbrochener Schnitt).

Unter die spanlosen Gewindeerzeugungswerkzeuge fallen die sogenannten Gewindefurcher (vgl. EMUGE-Handbuch, Kapitel 9, Seiten 299 bis 324) sowie die sogenannten Zirkulargewindeformer.

Gewindefurcher weisen an einem Werkzeugschaft ein Außenprofil auf, das die Werkzeugachse spiral- oder schraubenförmig mit der Steigung des zu erzeugenden Gewindes umläuft und einen annähernd polygonalen Querschnitt aufweist. Die im Allgemeinen abgerundeten Polygon-Eckbereiche bilden Drückstollen oder Furchzähne oder Formkeile, die das Gewinde durch plastische Verformung und Fließen des Werkstückmaterials in die Zwischenräume zwischen dem Außenprofil einerseits und Verdichtung des Werkstückmaterials andererseits in das Werkstück eindrücken. Zur Erzeugung eines Innengewindes in einer bereits vorhandenen Bohrung wird der Gewindefurcher mit einer linearen Vorschubbewegung axial zur Werkzeugachse und unter Drehung des Werkzeugs um diese Werkzeugachse in die Bohrung eingeführt.

Bekannte Ausführungsbeispiele solcher (axialen) Gewindefurcher finden sich auch in DE 101 36 293 A1*,* DE 199 58 827 A1*,* oder auch in DE 39 34 621 C2*.*

Aus der DE 10 2016 113 571 A1 ist ein Gewindebohrer bekannt, welcher einen Schaft und einen Schneidbereich aufweist, welche entlang einer Längsachse des Gewindebohrers angeordnet sind, wobei der Schneidbereich an seiner Umfangsseite mehrere Schneidzähne aufweist, welche zur spanabhebenden Ausbildung von Gewindegängen in einem Bohrloch vorgesehen sind, wobei der Schneidbereich zumindest eine quer zu seiner Umfangsseite verlaufende Spanfläche aufweist, welche sich zumindest über zugeordnete Spanflanken der Schneidzähne erstreckt, wobei die zumindest eine Spanfläche wenigstens eine jeweilige mittels eines Laserverfahrens erzeugte streifenförmige Oberflächenstrukturierung aufweist, welche sich zumindest über einen Teilbereich der Spanflanken erstreckt. Dabei können Erhebungen durch Materialauftrag erzeugt worden sein.

Aus der EP 3 170 602 A1 ist ein Gewindeformer oder -bohrer bekannt, umfassend einen Schaftkörper, der an seinem einen Ende einen Einspannabschnitt und an seinem anderen Ende einen Profilkörper zum Formen oder Schneiden eines Gewindes aufweist, wobei zumindest der Profilkörper schichtweise in einem 3D-Druckverfahren aufgebaut worden ist, wobei mindestens zwei aus unterschiedlichen Materialien bestehende Abschnitte des Profilkörpers erzeugt worden sind. Die EP 3 170 602 A1 offenbart die Merkmale des Oberbegriffs des Anspruchs 1.

Aus der EP 3 170 601 A1 ist ein Gewindeformer oder -bohrer und ein Verfahren zur Herstellung eines solchen bekannt. Das Verfahren zum Herstellen des Gewindeformers oder -bohrers sieht vor den Gewindeformer oder -bohrer vollständig mittels 3D-Druck-Verfahren aufzubauen, oder einen mittels 3-D-Druck-Verfahren aufgebauten Profilkörper nachfolgend mit einem Schaft z.B. mittels Schraubbolzen zu verbinden.

Aufgabe der Erfindung ist es, ein Gewindewerkzeug sowie ein Verfahren zum Herstellen des Gewindewerkzeuges anzugeben, welches eine hohe Flexibilität aufweist.

Die Aufgabe der Erfindung wird durch die Merkmale der Ansprüche 1 und 8 gelöst. Zweckmäßige Ausgestaltungen ergeben sich aus den jeweiligen Unteransprüchen.

Das erfindungsgemäße Gewindewerkzeug umfasst einen Schaft und einen Profilkörper, wobei der Profilkörper zum Scheiden oder Formen eines Gewindes ausgelegt ist, wobei der Schaft aus einem ersten Material in einem Volumenformverfahren und der Profilkörper aus einem zweiten Material mit einem additiven Verfahren hergestellt ist, welches Aufbringen eines pulverförmigen Precursors oder Rohmaterials auf dem Schaft umfasst. Unter Volumenverfahren ist insbesondere ein Gießverfahren oder Pressverfahren oder Walzverfahren zu verstehen. Ein solcher mit einem Volumenverfahren hergestellter Schaft ist kostengünstig. Für verschiedene Gewindewerkzeuge können gleiche Schäfte verwendet werden. Unter einem additiven Verfahren kann zum Beispiel ein Laser- oder Elektronenstrahlschmelzverfahren verstanden werden, bei dem pulverförmiges Material, insbesondere ein pulverförmiger Precursor oder Rohmaterial, aufgetragen wird und dann durch lokales Aufschmelzen oder lokales Sintern mit der darunterliegenden Schicht verbunden wird. Insbesondere kann eines der additiven Verfahren oder eine Kombination der additiven Verfahren verwendet werden, die aus dem Artikel C. Körner - Additive manufacturing of metallic components by selective electron beam melting - a review, International Materials Reviews, 61:5, 2016, Seiten 361-377, oder aus dem Artikel Lawrence E. Murr Fabrication of Metal and Alloy Components by Additive Manufacturing: Examples of 3D Materials Science, Journal of Materials Research and Technology, Elsevier, 2012, Seiten 42 - 54 bekannt sind, oder auch bekannte 3-D-Druckprozesse, insbesondere ein selektiver Lasersinterprozess oder ein selektiver Laserschmelzprozess oder ein Prozess zum Laserauftragsschweißen. Ein solches Gewindewerkzeug ist kostengünstig herzustellen.

Zweckmäßigerweise ist das erste Material zäher oder dämpfender als das zweite Material. Das erste Material kann insbesondere ein Schnellarbeitsstahl (HSS, HSS-E, HSS-E-PM) oder ein Hartmetall (HM) sein. Als zweites Material können verschiedene für additive Verfahren geeignete Materialien eingesetzt werden, welche eine ausreichende Härte/Zähigkeit aufweisen, dazu gehören Stahl, Eisen, Nickelbasis-Legierungen, Kupferbasis-Legierungen, Kobaldbasis-Legierungen sowie Titan-Aluminium-Legierungen.

In einer Ausgestaltung umfasst der Profilkörper zumindest einen Kühlkanal, welcher vorzugsweise mit einem additiven Verfahren hergestellt ist. Ein solcher Kühlkanal kann ausschließlich außerhalb des Schaftes oder teilweise außerhalb des Schaftes angeordnet sein. Im Bereich des Schaftes kann ein solcher Kühlkanal als Bohrung, geradlinige Nut oder gebogene Nut ausgeführt sein. Der Kühlkanal kann im Bereich des Profilkörpers gradlinig oder gebogen ausgeführt sein. Der Kühlkanal weist im Bereich des Profilkörpers eine oder mehrere Öffnungen auf. Insbesondere kann sich der Kühlkanal im Profilkörper baumartig verzweigen.

Das Gewindewerkzeug ist ausgewählt aus: Gewindebohrer, Gewindeformer, Gewindefurcher oder Gewindefräser.

Der Schaft des Gewindewerkzeuges kann Nuten umfassen. Diese Nuten können teilweise oder vollständig Teil von Kühlkanälen sein. Alternativ oder zusätzlich können Teile des Profilkörpers zum Beispiel in Form von Schneid- oder Furchprofilen, insbesondere Schneid- oder Furchzähnen, ganz oder teilweise in zumindest einigen der Nuten angeordnet sein.

In einer Ausgestaltung ist der Profilkörper auf einer vom Schaft abgewandten Seite zumindest teilweise mit einer Schicht aus einem dritten Material überzogen, wobei das dritte Material eine größere Härte als das erste und/oder das zweite Material aufweist. Bei dem dritten Material kann es sich zum Beispiel um polykristallinem Diamant, Diamant-ähnliche Schichten, z.B. Diamant like Carbon (DLC), TaC, oder ein Nitrid, z.B. Titannitrid, TiCN, AICrN handeln, so dass die Schicht eine sogenannte Hartschicht ist.

In einer weiteren Ausgestaltung kann der Profilkörper im Bereich der Spitzen der Schneid- oder Furchprofilen mit vorgeformten Profilkronen versehen sein, die mittels dem additiven Verfahren und/oder einem anderem Adhäsionsverfahren mit einem radial inneren Bereich des Profilkörpers verbunden sind. Die Profilkronen können vorzugsweise aus dem zweiten oder dem zweiten und dritten Material gebildet sein.

Das erfindungsgemäße Verfahren zum Herstellen eines Gewindewerkzeugs umfasst:
- Bereitstellen eines mittels einem Volumenformverfahren hergestellten Schaftes aus einem ersten Material und
- Aufbringen eines Profilkörpers aus einem zweiten Material in einem additiven Verfahren, welches Aufbringen eines pulverförmigen Precursors oder Rohmaterials auf dem Schaft umfasst.

Das Aufbringen des Profilkörpers in einem additiven Verfahren weist einen Schritt des Aufbringens eines pulverförmigen Precursors und/oder Rohmaterials auf und einen Schritt des Formens einer Schicht, vorzugsweise einer geschlossenen Schicht, aus dem pulverförmigen Precursor und/oder Rohmaterial. Der pulverförmige Precursor und/oder Rohmaterial kann zum Beispiel in einer dafür vorgesehenen Anlage, insbesondere in-situ, mit einer Düse auf den Schaft bzw. eine bereits vorhandene Schicht aufgebracht werden und mittels eines Laserstrahls oder Elektronenstrahls aufgeschmolzen werden, so dass sich beim Abkühlen eine Schicht bildet. Bei dieser Ausgestaltung findet der Herstellungsvorgang vorzugsweise im Vakuum oder in einer Schutzgasatmosphäre statt. Die Schicht ist ein bereits aufgebrachter Teil des Profilkörpers. In einer Ausgestaltung können zwei oder vier oder sechs Düsen für den Auftrag des pulverförmigen Precursors und/oder Rohmaterials um einen zentralen Laser angeordnet sein, der den aus den Düsen rieselnden bzw. beschleunigte pulverförmigen Precursor und/oder Rohmaterial zu einer Schicht verfestigt. Das Vorsehen eines zusätzlichen Haftmittels oder ähnlichem, um eine Umverteilung des aufgebrachten pulverförmigen Precursors und/oder Rohmaterials zu vermeiden ist nicht notwendig.

Bei dem Precursor und/oder Rohmaterial kann es sich um das zweite Material handeln, welches in Pulverform vorliegt. Es kann sich aber auch um eine Mischung aus dem zweiten Material und einem weiteren Material, z.B. einem Bindemittel handeln. Zum Aufbringen des pulverförmigen Precursors oder Rohmaterials kommt es in Frage rieselfähiges Pulver aufzutragen und vorzugsweise mittels eines Schiebers zu verteilen. Ein rieselfähiges Pulver hat insbesondere einen Partikeldurchmesser von 20 µm oder größer.

Alternativ ist es möglich, dass Pulver trocken oder als Dispersion in einen Behälter zu füllen, und den Rohling teilweise durch den mit Pulver gefüllten Behälter zu rotieren. Es handelt sich also um eine Art Tauchbad. Das Pulver muss dann so an dem Rohling anhaften, dass beim Herausdrehen des Rohlings zumindest eine Schicht Pulver auf dem Rohling verbleibt, welcher dann zu einer Materialschicht verfestigt wird. Dabei kann zum Beispiel ein Laser zum selektiven Formen der Schicht so angeordnet sein, dass der Bereich, auf den das Pulver aufgetragen wurde, so weiterrotiert wird, dass er dem Laser nachfolgend gegenübersteht und so eine Schicht geformt wird. Somit wird bei jeder Rotation eine Schicht Pulver aufgetragen und nachfolgend eine Schicht gebildet.

Zweckmäßigerweise wird der pulverförmige Precursor oder Rohmaterial vorzugsweise an dem Schaft oder einem bereits aufgebrachten Teil des Profilkörpers angehaftet. Eine solche Haftung oder Adhäsion kann durch elektrostatische Anziehung oder Klebung erfolgen.

Dazu kann der Schaft elektrostatisch aufgeladen werden, so dass ein aufgebrachter pulverförmige Precursor und/oder Rohmaterial an dem Schaft bzw. einer bereits aufgebrachten Schicht des Profilkörpers anhaftet, bevor aus dem pulverförmige Precursor und/oder Rohmaterial eine Schicht gebildet wird. Zur elektrostatischen Aufladung kann der Schaft kontaktiert werden und eine entsprechende negative oder positive Spannung angelegt werden.

In einer Ausgestaltung können die Partikel in einer Dispersion, insbesondere einer dickflüssigen oder zähflüssigen oder klebrigen oder viskosen Dispersion, vorliegen, welche auf den Schaft zum Beispiel mittels eines Schabers aufgestrichen wird. Alternativ kann eine solche Dispersion aber auch wie oben beschrieben als Tauchbad vorliegen oder aufgespritzt werden. Beim nachfolgenden Formen der Schicht wird dann die Dispersionsflüssigkeit z.B. verdampft. Dabei kann die Dispersionsflüssigkeit Bindemittel enthalten. Beim der Schichtbildung ist es in dieser Ausgestaltung möglich die Partikel mittels eines Sintervorgangs zu verbinden. Ein alternatives Aufschmelzen von Partikel findet zweckmäßigerweise erst statt, wenn die Dispersionsflüssigkeit verdampft bzw. entfernt ist.

Zur Fertigung von profilierten Oberflächen wird nur in bestimmten Bereichen der pulverförmige Precursor und/oder Rohmaterial aufgebracht und lokal umgewandelt. In einer Ausgestaltung kann ein erster Teil des Profilkörpers mittels eines ersten additiven Verfahrens und ein zweiter Teil des Profilkörpers mittels eines zweiten additiven Verfahrens aufgebracht werden. So kann insbesondere ein Schaft-naher Teil des Profilkörpers, welcher großflächige Strukturen aufweist, durch Aufbringen einer Dispersion und nachfolgenden Sintern hergestellt werden und ein Schaft-ferner Bereich des Profilkörpers, welcher feinere Strukturen aufweist, durch in-situ Aufbringen von Pulver und nachfolgenden Sintern und/oder Schmelzen mittels eines Laserstrahls oder Elektronenstrahls oder anderen hochenergetischen Strahl hergestellt werden. Alternativ oder zusätzlich kann eine Korngröße des pulverförmige Precursor und/oder Rohmaterial für einen Schaft-nahen Teil des Profilkörpers größer sein und für einen Schaft-fernen Teil des Profilkörpers kleiner, sein.

Zweckmäßigerweise umfasst oder ist das additive Verfahren selektives Strahlschmelzen. Bei selektivem Strahlschmelzen kann es sich insbesondere um Laserstrahlschmelzen oder Elektronenstrahlschmelzen handeln. Die Nutzung anderer hochenergetischer Strahlen ist auch möglich.

In einer Ausgestaltung umfasst das Verfahren weiterhin Aufbringen einer Hartschicht mittels eines Schichtabscheideverfahrens. Als Schichtabscheideverfahren kommen zum Beispiel CVD (chemische Gasphasenabscheidung) oder PVD (physikalische Gasphasenabscheidung) in Frage.

Mit dem Verfahren wird zweckmäßigerweise eines aus Gewindebohrer, Gewindeformer, Gewindefurcher oder Gewindefräser hergestellt.

In Ausgestaltung umfasst das Verfahren weiterhin: Herstellen eines Kühlkanals mit den Schritten:
- Aufbringen eines wulstförmigen Platzhalters,
- Überziehen des Platzhalters mit einer Schicht aus zweitem Material mittels einem additiven Verfahren,
- Entfernen des Platzhalters.

Alternativ kann ein Kühlkanal auch zum Beispiel mittels lokalem Aufbringen eines Pulvers mit einer Düse und anschließendem Sintern hergestellt werden.

Der bereitgestellte Schaft kann Nuten aufweisen und mittels des additiven Verfahrens können im Nuten-inneren Gewindeschneidzähne oder Gewindefurchprofile hergestellt werden.

Der Platzhalter ist zweckmäßigerweise aus einem Material, welches sich zum einen nicht mit dem ersten und/oder zweitem Material verbindet oder mit einem von diesem reagiert. Des Weiteren hat das Material des Platzhalters zum Beispiel einen niedrigeren Schmelzpunkt als das zweite Material oder ist mittels eines Lösungsmittels lösbar. Es kann beispielsweise wachsartig sein.

Das Verfahren kann in Ausgestaltung auch die Schritte umfassen: Bereitstellen von Profilkronen und Verbinden der Profilkronen mit einem radial inneren Teil des Profilkörpers. Die Profilkronen können mittels dem additiven Verfahren und/oder einem anderem Adhäsionsverfahren mit einem radial inneren Bereich des Profilkörpers verbunden werden. Die Profilkronen können vorzugsweise aus dem zweiten oder dem zweiten und dritten Material gebildet sein. Zweckmäßigerweise wird nach dem Verbinden der Profilkronen mit einem radial inneren Bereich des Profilkörpers eine Hartschicht aufgebracht.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Prinzipskizze:
- Fig. 1:: Querschnitt eines Gewindewerkzeugs in einer ersten Ausgestaltung;
- Fig. 2:: Längsschnitt eines Gewindewerkzeugs in einer ersten Ausgestaltung;
- Fig. 3:: Längsschnitt eines Gewindewerkzeugs in einer zweiten Ausgestaltung;
- Fig. 4:: Querschnitt eines Gewindewerkzeugs in einer dritten Ausgestaltung;
- Fig. 5:: Querschnitt eines Gewindewerkzeugs in einer vierten Ausgestaltung.

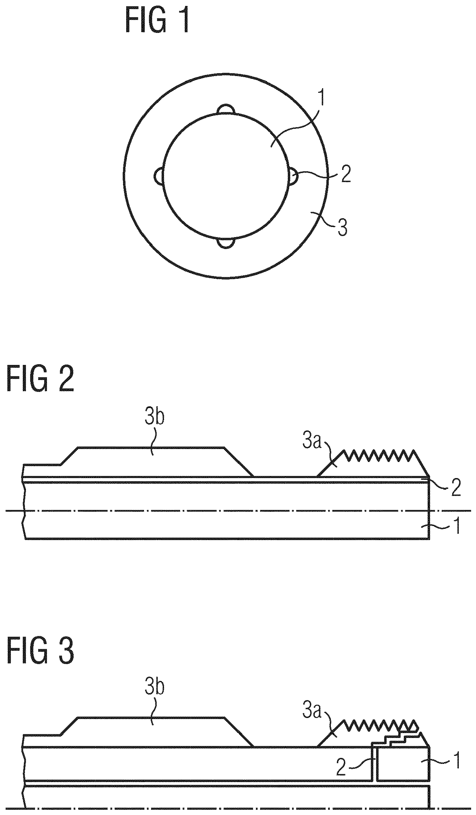

Fig. 1 zeigt einen Querschnitt eines Gewindewerkzeugs in einer ersten Ausgestaltung. In dieser Ausgestaltung weist das Gewindewerkzeug einen im Querschnitt runden Schaft 1 auf. Auf diesem Schaft 1 sind Kühlkanäle 2 angeordnet. Die Kühlkanäle 2 sind in dem Profilkörper 3 aufgenommen, der radial außerhalb des Schafts 1 angeordnet ist. Zur Herstellung dieses Gewindewerkzeugs wird ein Schaft 1 bereitgestellt. Auf den Schaft 1 werden Platzhalter aufgebracht, welcher eine Form aufweisen, die der der Kühlkanäle 2 entspricht. Auf den Schaft 1 und den Platzhalter wird ein pulverförmiger Precursor schichtweise aufgebracht, der dann jeweils zu einer Schicht aus dem zweiten Material umgewandelt wird. Dieser Schritt wird solange wiederholt, bis eine vorbestimmte Form des Profilkörpers 2 erreicht ist. Wenn der Profilkörper 3 seine vorbestimmte Form aufweist, wird der Platzhalter entfernt, so dass das Gewindewerkzeug fertiggestellt ist.

Fig. 2 zeigt einen Längsschnitt des Gewindewerkzeugs in der ersten Ausgestaltung. Der Kühlkanal 2 ist zwischen dem Schaft 1 und dem Profilkörper 3 angeordnet, wobei der Profilkörper 3 Profilkörperabschnitte 3a und 3b umfasst. Der Profilkörperabschnitt 3a im ersten Abschnitt des Gewindewerkzeugs ist mit Gewindeschneidzähnen versehen. Der Kühlkanal 2 verläuft parallel zu einer Mittellängsachse des Gewindewerkzeugs.

Fig. 3 zeigt einen Längsschnitt eines Gewindewerkzeuges in einer zweiten Ausgestaltung. Die zweite Ausgestaltung unterscheidet sich im Wesentlichen durch die Ausgestaltung des Kühlkanals 2, welcher im Bereich des Profilkörperabschnitts 3a eine Verzweigung aufweist, und dessen einer Ast sich schräg mit einer radialen Ausbreitungskomponente durch den Profilkörperabschnitt 3a nach außen erstreckt. Zur Herstellung eines solchen Kühlkanals 2 weist der aufgebrachte Platzhalter eine solche verzweigte Form auf.

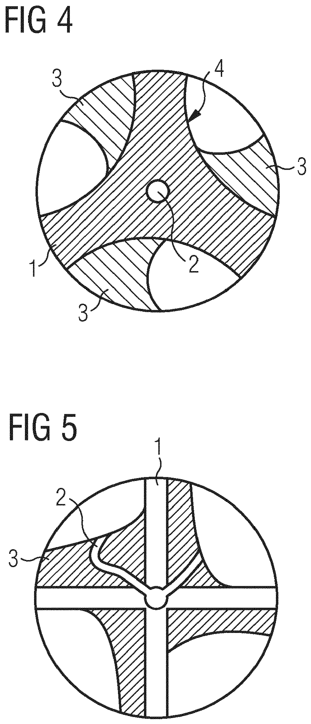

Fig. 4 zeigt einen Querschnitt eines Gewindewerkzeugs in einer dritten Ausgestaltung. In der dritten Ausgestaltung ist der Schaft 1 mit drei in Umfangsrichtung verteilten Nuten 4 versehen. Zentral verläuft im Schaft 1 ein Kühlkanal 2. In jeder der Nuten 4 des Schafts 1 ist ein Profilkörperabschnitt 3 angeordnet.

Fig. 5 zeigt einen Querschnitt eines Gewindewerkzeugs in einer vierten Ausgestaltung. In der vierten Ausgestaltung ist der Schaft 1 kreuzförmig ausgebildet. Zentral in dem kreuzförmigen Schaft ist ein Kühlkanal 2 angeordnet. An den Rippen des Schaftes sind die Profilkörperabschnitte 3 angeordnet. Durch jeden der Profilkörperabschnitte 3 erstreckt sich zumindest ein Kühlkanal 2, welcher sich entlang einer gebogenen Linie von innen nach außen durch den Profilkörper erstreckt.

### Bezugszeichen liste

- 1: Schaft
- 2: Kühlkanal
- 3: Profilkörper
- 3a, b: Profilkörperabschnitte
- 4: Nut

## Patentansprüche

1. Gewindewerkzeug umfassend einen Schaft (1) und einen Profilkörper (3), wobei der Profilkörper (3) zum Schneiden oder Formen eines Gewindes ausgelegt ist,
**dadurch gekennzeichnet, dass**
der Schaft (1) aus einem ersten Material in einem Volumenformverfahren hergestellt ist und der Profilkörper (3) aus einem zweiten Material mit einem additiven Verfahren hergestellt ist, welches Aufbringen eines pulverförmigen Precursors oder Rohmaterials auf dem Schaft (1) umfasst.

2. Gewindewerkzeug nach Anspruch 1, wobei das erste Material zäher oder dämpfender ist als das zweite Material.

3. Gewindewerkzeug nach Anspruch 1 oder 2, wobei der Profilkörper (3) zumindest einen Kühlkanal (2) umfasst, welcher vorzugsweise mit einem additiven Verfahren hergestellt ist.

4. Gewindewerkzeug nach einem der vorhergehenden Ansprüche, wobei das Gewindewerkzeug ausgewählt ist aus: Gewindebohrer, Gewindeformer, Gewindefurcher, oder Gewindefräser.

5. Gewindewerkzeug nach einem der vorhergehenden Ansprüche, wobei der Schaft (1) Nuten (4) umfasst.

6. Gewindewerkzeug nach einem der vorhergehenden Ansprüche, wobei der Profilkörper (3) auf einer vom Schaft (1) abgewandten Seite zumindest teilweise mit einer Schicht aus einem dritten Material überzogen ist, wobei das dritte Material eine größere Härte als das erste und/oder das zweite Material aufweist.

7. Gewindewerkzeug nach einem der vorhergehenden Ansprüche, wobei der Profilkörper (3) vorgeformte Profilkronen umfasst.

8. Verfahren zum Herstellen eines Gewindewerkzeugs umfassend:
- Bereitstellen eines mittels einem Volumenformverfahren hergestellten Schaftes (1) aus einem ersten Material
- Aufbringen eines Profilkörpers (3) aus einem zweiten Material in einem additiven Verfahren, welches Aufbringen eines pulverförmigen Precursors oder Rohmaterials auf dem Schaft (1) umfasst.

9. Verfahren nach Anspruch 8, wobei das Aufbringen eines Profilkörpers (3) das Aufbringen eines pulverförmigen Precursors oder Rohmaterials mittels einer Düse und/oder mittels eines Schieber und/oder mittels eines Tauchbades, oder einer den pulverförmigen Precursor oder Rohmaterial enthaltenden Dispersion umfasst, wobei der pulverförmige Precursors oder Rohmaterial vorzugsweise an dem Schaft oder einem bereits aufgebrachten Teil des Profilkörpers anhaftet.

10. Verfahren nach Anspruch 8 oder 9, wobei das additive Verfahren selektives Strahlschmelzen umfasst oder ist.

11. Verfahren nach einem der Ansprüche 8 bis 10, wobei das Verfahren weiterhin Aufbringen einer Hartschicht mittels eines Schichtabscheideverfahrens umfasst.

12. Verfahren nach einem der Ansprüche 8 bis 11, wobei mit dem Verfahren eines aus Gewindebohrer, Gewindeformer, Gewindefurcher, oder Gewindefräser hergestellt wird.

13. Verfahren nach einem der Ansprüche 8 bis 12, wobei das Verfahren weiterhin umfasst: Herstellen eines Kühlkanals (2) mit den Schritten:
- Aufbringen eines wulstförmigen Platzhalters,
- Überziehen des Platzhalters mit einer Schicht aus zweitem Material mittels einem additiven Verfahren,
- Entfernen des Platzhalters.

14. Verfahren nach einem der Ansprüche 8 bis 13, wobei der bereitgestellte Schaft Nuten (4) aufweist und mittels des additiven Verfahrens im Nuten-inneren Gewindeschneidzähne oder Gewindefurchprofile hergestellt werden.

15. Verfahren nach einem der Ansprüche 8 bis 14, wobei das Verfahren weiterhin umfasst: Bereitstellen von Profilkronen und Verbinden der Profilkronen mit einem radial inneren Teil des Profilkörpers (3).

## Claims

1. Threading tool comprising a shaft (1) and a profile body (3),
wherein the profile body (3) is designed for cutting or forming a thread, **characterised in that**
the shaft (1) is made of a first material in a bulk moulding process and the profile body (3) is made of a second material with an additive process comprising applying a powdered precursor or raw material to the shaft (1).

2. Threading tool according to claim 1, wherein the first material is tougher or more damping than the second material.

3. Threading tool according to claim 1 or 2, wherein the profile body (3) comprises at least one cooling channel (2), which is preferably produced by an additive process.

4. Threading tool according to any of the preceding claims, wherein the threading tool is selected from: a tap, a tap former, a tap cutter, or a thread milling cutter.

5. Threading tool according to any of the preceding claims, wherein the shaft (1) comprises grooves (4).

6. Threading tool according to any of the preceding claims, wherein the profile body (3) is at least partially coated with a layer of a third material on a side facing away from the shaft (1), the third material having a greater hardness than the first and/or the second material.

7. Threading tool according to any of the preceding claims, wherein the profile body (3) comprises preformed profile crowns.

8. Method of manufacturing a threading tool comprising:
- providing a shaft (1) made of a first material by means of a volume forming process
- applying a profiled body (3) of a second material in an additive process which comprises applying a powdered precursor or raw material to the shaft (1).

9. Method according to claim 8, wherein applying a profiled body (3) comprises applying a powdered precursor or raw material by means of a nozzle and/or by means of a slide and/or by means of an immersion bath, or a dispersion containing the powdered precursor or raw material, wherein the powdered precursor or raw material preferably adheres to the shaft or to an already applied part of the profiled body.

10. Method according to claim 8 or 9, wherein the additive method comprises or is selective jet melting.

11. Method according to any of claims 8 to 10, the method further comprising applying a hardcoat by means of a layer deposition process.

12. Method according to any of claims 8 to 11, wherein the method produces one of a tap, thread former, thread cutter, or thread milling cutter.

13. Method according to any of claims 8 to 12, the method further comprising:
Making a cooling channel (2) comprising the steps of:
- application of a bead-shaped placeholder,
- coating the placeholder with a layer of second material using an additive process,
- remove the placeholder.

14. Method according to any of claims 8 to 13, wherein the shaft provided has grooves (4) and thread cutting teeth or thread profiles are produced in the groove interior by means of the additive method.

15. Method according to any of claims 8 to 14, the method further comprising:
providing profile crowns and connecting the profile crowns to a radially inner part of the profile body (3).

## Revendications

1. Outil de filetage comprenant une tige (1) et un corps profilé (3),
dans lequel le corps profilé (3) est conçu pour couper ou former un filetage, **caractérisé en ce que**
la tige (1) est fabriquée à partir d'un premier matériau par un procédé de moulage en volume et le corps profilé (3) est fabriqué à partir d'un second matériau par un procédé additif qui comprend l'application d'un précurseur ou d'une matière première en poudre sur la tige (1).

2. Outil de filetage selon la revendication 1, dans lequel le premier matériau est plus tenace ou plus amortissant que le second matériau.

3. Outil de filetage selon la revendication 1 ou 2, dans lequel le corps profilé (3) comprend au moins un canal de refroidissement (2), qui est de préférence fabriqué par un procédé additif.

4. Outil de filetage selon l'une des revendications précédentes, l'outil de filetage étant choisi parmi: un taraud, un taraud par déformation, un taraud par refoulement, ou une fraise à fileter.

5. Outil de filetage selon l'une des revendications précédentes, dans lequel la tige (1) comprend des rainures (4).

6. outil de filetage selon l'une des revendications précédentes, dans lequel le corps profilé (3) est au moins partiellement recouvert d'une couche d'un troisième matériau sur une face opposée à la tige (1), le troisième matériau présentant une dureté supérieure à celle du premier et/ou du deuxième matériau.

7. Outil de filetage selon l'une des revendications précédentes, dans lequel le corps profilé (3) comprend des couronnes profilées préformées.

8. Procédé de fabrication d'un outil de filetage comprenant
- fournir une tige (1) fabriquée par un procédé de moulage en volume à partir d'un premier matériau
- application d'un corps profilé (3) en un deuxième matériau dans un procédé additif, qui comprend l'application d'un précurseur en poudre ou d'un matériau brut sur la tige (1).

9. Procédé selon la revendication 8, dans lequel l'application d'un corps profilé (3) comprend l'application d'un précurseur ou d'une matière première en poudre au moyen d'une buse et/ou au moyen d'un poussoir et/ou au moyen d'un bain d'immersion, ou d'une dispersion contenant le précurseur ou la matière première en poudre, le précurseur ou la matière première en poudre adhérant de préférence à la tige ou à une partie déjà appliquée du corps profilé.

10. Procédé selon la revendication 8 ou 9, dans lequel le procédé additif comprend ou est une fusion sélective par jet.

11. Procédé selon l'une quelconque des revendications 8 à 10, ledit procédé comprenant en outre l'application d'une couche dure par un procédé de dépôt de couche.

12. Procédé selon l'une quelconque des revendications 8 à 11, dans lequel le procédé permet de réaliser un taraud, un taraud par déformation, un taraud par refoulement ou une fraise à fileter.

13. Procédé selon l'une quelconque des revendications 8 à 12, ledit procédé comprenant en outre: la fabrication d'un canal de refroidissement (2) comprenant les étapes consistant à:
- application d'un espaceur en forme de bourrelet,
- revêtement de l'espaceur avec une couche d'un deuxième matériau par un procédé additif,
- suppression du caractère générique.

14. Procédé selon l'une des revendications 8 à 13, dans lequel la tige mise à disposition présente des rainures (4) et des dents de taraudage ou des profils de taraudage sont fabriqués au moyen du procédé additif à l'intérieur des rainures.

15. Procédé selon l'une quelconque des revendications 8 à 14, le procédé comprenant en outre: la mise à disposition de couronnes profilées et l'assemblage des couronnes profilées avec une partie radialement intérieure du corps profilé (3).
